# FASCICULE DE BREVET EUROPEEN

(11) **EP 2 843 156 B1**
(45) Date de publication et mention de la délivrance du brevet: **16.03.2016**
(21) Numéro de dépôt: 14182163.7
(22) Date de dépôt: 25.08.2014
(51) Int. Cl.: E04G 9/08, E04G 15/06

(54) **Boite de réservation et procédés de montage d'une telle boite**
Verteilerkasten und Montageverfahren zum Einbau eines solchen Kastens
Reservation box and methods for mounting such a box

(30) Priorité: 29.08.2013 FR 1302004
(43) Date de publication de la demande: 04.03.2015
(73) Titulaire: Mabamure, 63800 Cournon d'Auvergne (FR)
(72) Inventeur: Aucouturier, René, 63140 Saint Hippolyte (FR); Dufour, Laurent, 33200 Bordeaux (FR)
(74) Mandataire: Perrier, Jean-Pierre

(56) Documents cités:
- EP-A1- 2 009 200
- FR-A1- 2 789 711
- FR-A1- 2 933 116

## Description

La présente invention concerne une boîte de réservation et des procédés de montage d'une telle boîte.

Une boîte de réservation est une boîte de forme géométrique variée, généralement carrée ou rectangulaire, dont le volume intérieur est propre à délimiter un espace dans une dalle de béton, préfabriquée ou non, pour recevoir au moins une gaine dans laquelle est inséré un conduit technique destiné à véhiculer des fluides, c'est-à-dire un tuyau, métallique ou en polymère, dans lequel circule un liquide ou un gaz. II est connu de réaliser de telles boîtes soit par assemblage de panneaux en un matériau rigide soit par pliage d'un matériau souple, par exemple un matériau alvéolaire.

Une boîte de réservation permet la mise en attente des gaines et conduits dans le volume intérieur de la boîte de réservation, pour une reprise ultérieure. L'introduction se fait par un ou plusieurs orifices, ou prédécoupes, réalisés dans les parois latérales de la boîte. Une telle configuration permet de positionner les gaines et conduits sur une dalle ou une paroi avant le coulage du béton, à savoir en posant, par exemple, les gaines et conduits sur un treillis métallique constitutif de la dalle en béton. On introduit aisément au moins une gaine et un conduit dans la boîte de réservation, un orifice ménagé dans la boîte se trouvant sensiblement dans l'alignement de la gaine et du conduit. Une fois que le béton est coulé, il recouvre alors totalement les gaines recevant les conduits, sur une épaisseur adaptée pour assurer la protection des gaines et conduits. Le béton recouvre également les parois de la boîte de réservation, à l'exception du couvercle de celle-ci pour permettre un accès ultérieur à son volume intérieur.

Les gaines et conduits introduits dans la boîte doivent être coudés, pour pouvoir être repris et sortis de la boîte par le couvercle. Cette opération est d'autant moins aisée à réaliser que les gaines, et surtout les conduits, sont assez peu déformables, ces derniers étant constitués en un matériau, par nature, rigide. De plus, en fonction de l'épaisseur de la dalle, la hauteur de la boîte de réservation est plus ou moins adaptée à cette épaisseur. Ceci induit que les orifices de la boîte ne sont pas toujours positionnés dans l'alignement des gaines et conduits. De ce fait, il est nécessaire de couder, de façon plus ou moins marquée, les gaines et conduits avant leur introduction dans la boîte de réservation. Ainsi, au voisinage de la boîte, l'épaisseur de béton est moindre, ce qui nuit à la protection des gaines et conduits. Par ailleurs, la présence de coudes induit des pertes de charge dans le circuit de liquide ou de gaz.

Afin de pouvoir s'adapter aisément aux différentes épaisseurs de dalles de béton, on connait des boîtes de réservation équipées de pieds, sécables ou modulables en hauteur. De telles boîtes sont par exemple celles divulguées par FR-A-2 789 711. Ces boîtes sont en un matériau rigide, les pieds étant également en un matériau rigide et plein. Ceci implique une mise en oeuvre complexe et un coût de fabrication élevé, indépendamment de leur poids et de leur encombrement. Le réglage de la hauteur de la boîte est obtenu par coupure des pieds ou par ajout d'une rallonge télescopique. II n'en demeure pas moins que les gaines et conduits doivent être courbés une fois à l'intérieur de la boîte, ce qui est d'autant moins aisé à réaliser que cette dernière reçoit généralement plusieurs gaines et conduits. De plus, de telles boîtes ne sont pas aisées à construire, transporter et stocker du fait de leur encombrement. On connait également des boîtes de réservation formées par pliage d'une plaque telle celle décrite dans FR-A-2 933 116, qui divulgue toutes les caractéristiques du préambule de la revendication 1.

Si de telles boîtes sont aisées à transporter et à fabriquer, elles ne permettent pas, en revanche, de s'adapter aux différentes épaisseurs d'une dalle en béton. De plus, les gaines et conduits sont toujours coudés à l'intérieur de la boîte.

C'est à ces inconvénients qu'entend plus particulièrement remédier l'invention en proposant une boîte de réservation améliorée, d'une fabrication et d'une mise en oeuvre simplifiées, facilitant la reprise des gaines et conduits dans la boîte, préservant une épaisseur de béton constante au-dessus des gaines et conduits, d'un encombrement et d'un poids optimisés.

A cet effet, l'invention a pour objet une boîte de réservation comprenant des panneaux latéraux, un panneau de fond et un couvercle, cette boîte délimitant un espace de passage d'au moins une gaine et/ou conduit technique dans une dalle en béton, la boîte étant formée par pliage d'une plaque en matériau alvéolaire comportant des lignes de pliage délimitant les panneaux latéraux, de fond et le couvercle de la boîte, le panneau de fond étant pourvu d'au moins un orifice d'entrée d'au moins une gaine et/ou conduit technique dans la boîte et au moins un panneau latéral étant pourvu d'au moins deux pattes formant, après pliage de la plaque, des pieds à la boîte de réservation.

Ainsi, outre une fabrication simplifiée et un encombrement réduit grâce au pliage d'une plaque, la présence de pieds permet d'adapter la hauteur de la boîte de sorte que le couvercle affleure à la face supérieure de la dalle une fois le béton coulé. L'orifice ménagé dans le fond de la boîte permet de maintenir en appui sur le treillis les gaines recevant les conduits jusqu'à ce que les gaines et conduits soient à l'aplomb du fond de la boîte. Ainsi, on a une épaisseur constante de béton au-dessus des gaines et conduits, avant leur introduction dans une boîte de réservation. De plus, une telle configuration permet d'utiliser moins de béton. En effet, seule la partie de la boîte définissant le volume de passage des gaines et conduits ainsi que l'emplacement des pieds est à combler avec du béton une fois la boîte enlevée. La partie située entre les pieds est, quant à elle, déjà comblée par le béton lors du coulage de la dalle.

Selon des aspects avantageux mais non obligatoires de l'invention, une telle boîte peut comprendre une ou plusieurs des caractéristiques suivantes:
- Pour au moins un panneau latéral, les deux pattes de ce panneau sont séparées par un espace intercalaire permettant, à l'état monté de la boîte, le passage d'au moins une gaine et/ou conduit technique.
- A l'état monté de la boîte, l'espace intercalaire s'étend sur toute la hauteur des pattes jusqu'au panneau de fond.
- L'orifice est ovale.
- L'orifice est en position excentrée sur le panneau de fond.
- L'orifice est pourvu d'un opercule prédécoupé.
- Les pattes sont configurées en L et définissent deux extrémités des panneaux latéraux.
- Un marquage visuel ou des prédécoupes sont réalisés sur les pattes, ce qui permet de repérer différentes longueurs des pieds.
- Les panneaux sont maintenus en configuration pliée par des organes de solidarisation, en forme de pattes, insérés dans des orifices ou fentes de forme complémentaire.
- Les panneaux sont maintenus en configuration pliée de manière réversible.

L'invention concerne également un procédé de montage d'une boîte de réservation selon un premier mode de réalisation conforme à l'une quelconque des caractéristiques précédentes, comprenant au moins les étapes suivantes :
- on plie les pattes définissant des extrémités de panneaux latéraux en les rabattant en direction du couvercle, afin de former les coins de la boîte,
- on insère une partie des pattes pliées dans des encoches ménagées entre un panneau latéral et le panneau de fond,
- on rabat le panneau de fond, de sorte qu'il soit parallèle au couvercle, en insérant des parties des pattes pliées dans des encoches ménagées entre le panneau de fond et un panneau latéral et
- on insère les organes de solidarisation dans les orifices correspondants.
- L'invention concerne également un procédé de montage d'une boîte de réservation selon un second mode de réalisation conforme à une des quatre premières caractéristiques, comprenant au moins les étapes suivantes :
- on rabat les uns vers les autres les panneaux constitutifs du fond, du couvercle et de deux côtés de la boîte pour définir le volume intérieur de la boîte,
- on rabat les panneaux constitutifs des panneaux latéraux pourvus des pattes les uns vers les autres, en recouvrant les panneaux formant déjà deux côtés de la boîte, pour fermer tous les côtés de la boîte et pour réaliser, par pliage des pattes, les pieds de cette dernière et
- on insère les organes de solidarisation dans les orifices correspondants.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:
- La figure 1 est une vue de dessus de la boîte conforme à un mode de réalisation de l'invention avant montage, la plaque en matériau alvéolaire étant en configuration dépliée,
- la figure 2 est une vue de dessous, à la même échelle, de la boîte en configuration pliée, avant utilisation,
- les figures 3 et 4 sont respectivement des vues de côté et de dessus, à la même échelle, de la boîte de la figure 2,
- la figure 5 est une coupe partielle et schématique, à la même échelle, de la boîte illustrée aux figures précédentes en position d'utilisation dans une dalle en béton et
- la figure 6 est une vue de dessus de la boîte conforme à un autre mode de réalisation de l'invention avant montage, la plaque en matériau alvéolaire étant en configuration dépliée.

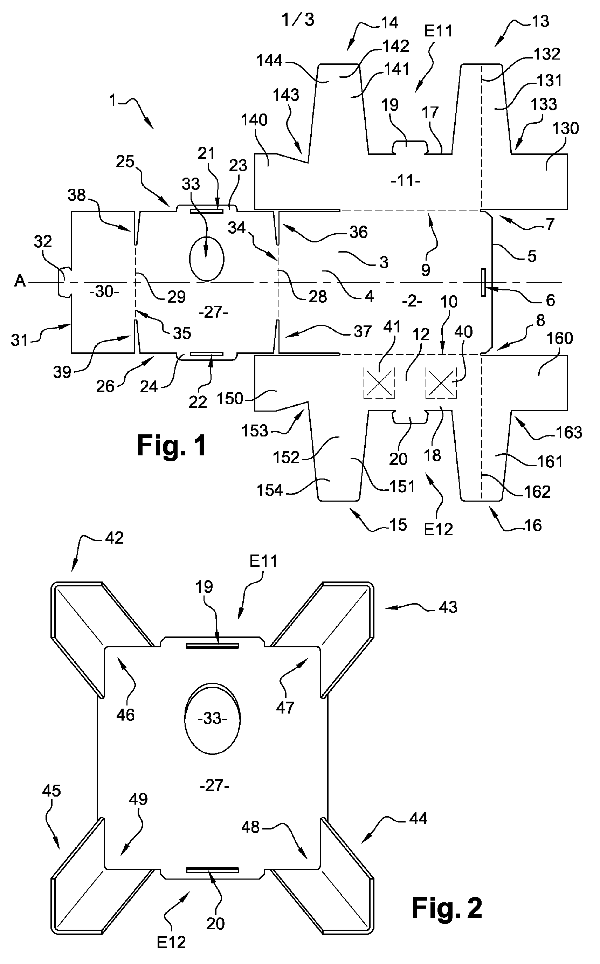

La figure 1 illustre un premier mode de réalisation d'une boîte de réservation, conforme à l'invention, avant sa mise en forme par pliage et son utilisation. Elle se présente sous la forme d'une plaque 1, plane. La plaque 1 est, avantageusement, réalisée en un matériau résistant aux intempéries et inerte vis-à-vis du béton. Ce matériau est, par exemple, du polypropylène alvéolaire, c'est-à-dire avec une structure en nid d'abeilles. Outre le fait d'être léger et facile à usiner, ce matériau n'adhère pas au béton d'où un décoffrage simplifié. Dans d'autres modes de réalisation, on utilise un autre matériau tel que du carton ou un autre polymère.

Les boîtes de réservation ont différentes formes et dimensions, étant entendu que l'on rencontre fréquemment des boîtes de forme carrée ou rectangulaire, par exemple de 22 cm par 15 cm de côté sur 25 cm de haut.

La figure 1 illustre une plaque 1 permettant de réaliser une boîte carrée, étant entendu que l'invention concerne toutes formes et/ou dimensions de boîtes de réservation. La plaque 1 est divisée en plusieurs panneaux délimités par des lignes de pliage représentées par des lignes en pointillées à la figure 1.

Un premier panneau 2, de forme carrée, forme le couvercle de la boîte de réservation B obtenue par pliage de la plaque 1. Une ligne de pliage 3 définit non seulement la zone de liaison avec un panneau latéral 4 mais matérialise également la zone d'articulation du couvercle 2 sur la boîte B. En d'autres termes, la ligne de pliage 3 forme également une charnière permettant au moins la fermeture du couvercle 2 lorsque la boîte B est obtenue par pliage de la plaque 1.

Le panneau 2 comprend, au voisinage d'un côté libre 5, c'est-à-dire un côté qui n'est relié à aucun panneau, un orifice configuré en fente allongée 6 ménagée sensiblement à mi-distance des coins biseautés 7, 8 du panneau 2. Ces derniers sont formés au niveau de la jonction entre le côté 5 avec deux lignes de pliage 9, 10 parallèles.

Les lignes de pliage 9, 10 relient le panneau 2 à deux panneaux latéraux 11, 12. En l'espèce, les panneaux 11, 12 définissent deux panneaux parallèles de la boîte B pliée. Chaque panneau 11, 12 n'est relié que par les lignes de pliage 9, respectivement 10, au seul panneau 2, à l'exclusion de toute autre liaison avec d'autres panneaux définissant la boîte B. Les extrémités libres de chaque panneau 11, 12 situées à proximité du côté 5 et du panneau 4 sont définies par des pattes 13 à 16 configurées globalement en L. Ainsi, le panneau 11 est pourvu de deux pattes 13, 14 parallèles disposées à ses extrémités. De façon similaire, le panneau 12 est pourvu de deux pattes 15, 16 parallèles situées également aux extrémités du panneau 12.

Les deux pattes 13 et 14, associées au panneau 11, sont séparées par un espace intercalaire E11. Comme on le verra dans ce qui suit, cet espace E11 permet le passage d'une gaine et/ou d'un conduit technique, lorsque la boîte est en configuration montée. De façon analogue, les deux pattes 15 et 16 sont séparées par un espace intercalaire E12 dont la fonction est identique à celle de l'espace E11.

Chaque patte 13 à 16 comprend une partie 130, 140, 150, 160 s'étendant vers l'extérieur du panneau 11 ou 12 qui la porte, cela de sorte que la dimension principale de la partie 130 à 160 est orientée parallèlement aux lignes de pliage 9 et 10. Ces parties 130 à 160 sont reliées, respectivement aux parties 131 à 161, des pattes 13 à 16. Les parties 131 à 161 sont perpendiculaires aux parties 130 à 160. Les parties 131 à 161 s'étendent vers l'extérieur des panneaux 11, 12, cela perpendiculairement à un axe longitudinal A de la plaque 1. Les parties 131 et 161 sont situées en regard l'une de l'autre. Elles comprennent, chacune sensiblement en position médiane, une ligne de pliage 132, 162. Les lignes de pliage 132, 162 sont alignées et parallèles au côté 5.

De même, les parties 141, 151 des pattes 14, 15 sont situées en regard l'une de l'autre et, de facto, sont parallèles, aux parties 131, respectivement 161. Les parties 141, 151 sont également pourvues chacune, en position médiane, d'une ligne de pliage 142, 152. Les lignes de pliage 142, 152 sont situées dans le prolongement de la ligne de pliage 3. Chaque panneau 11, 12 est pourvu, sur un côté libre 17, 18 situé entre, respectivement, les parties 131, 141 et 151, 161, d'un organe de solidarisation 19, 20 entre des panneaux. En l'espèce, les organes 19, 20 sont configurés en pattes de formes et de dimensions adaptées pour s'insérer, avantageusement de manière amovible, dans des orifices allongés 21, 22.

Ces orifices 21, 22 sont ménagés sur deux parties 23, 24 parallèles positionnées en position centrale sur deux côtés libres 25, 26, également parallèles, d'un panneau 27 définissant le fond de la boîte B lorsque la plaque 1 est pliée. Le panneau 27 a sensiblement les mêmes formes et dimensions que le panneau 2. Outre les côtés 25, 26, le panneau 27 est délimité par deux lignes de pliage 28, 29. La ligne de pliage 28 délimite un côté entre le panneau 4 et le panneau 27. La ligne de pliage 28 est parallèle à la ligne de pliage 3. La ligne de pliage 29, parallèle à la ligne 28, définit un côté entre le fond 27 et un panneau 30 formant le panneau latéral de la boîte B parallèle au panneau 4 lorsque la plaque 1 est pliée.

Le côté libre 31 du panneau 30, parallèle aux lignes 28, 29 est pourvu d'un organe de solidarisation 32, de dimensions et de formes adaptées pour s'insérer, avantageusement de manière amovible, dans l'orifice 6 lorsque la plaque 1 est pliée. Dans l'exemple, l'organe 32 est formé par une patte.

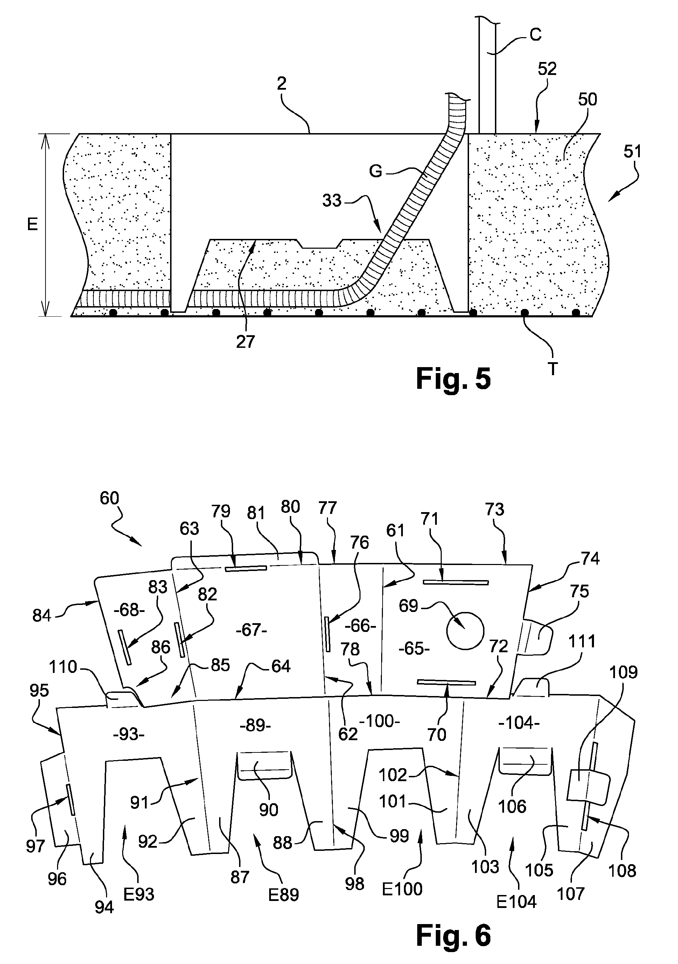

Le panneau 27 est pourvu d'au moins un orifice 33. Ici, un seul orifice 33 est illustré pour plus de lisibilité. L'orifice 33 est, avantageusement, ovale. En variante, il est circulaire ou d'une autre forme géométrique. Il est situé soit en position centrale soit, comme illustré de manière préférée, excentré par rapport au centre du panneau de fond 27. L'orifice 33 est traversant et de dimensions adaptées pour assurer le passage, avec un jeu minimal, d'au moins une gaine G destinée à recevoir un conduit. L'orifice 33, du fait qu'il est ovale et en position excentrée, permet l'introduction d'une gaine G, et donc d'un conduit, dans le volume intérieur de la boîte de réservation B à partir du fond 27 de cette dernière avec une courbure minimale de la gaine G et du conduit. La position excentrée de l'orifice 33 facilite la reprise de la gaine G et du conduit, comme cela apparait à la figure 5. Dans un mode de réalisation non représenté, l'orifice 33 est pourvu d'un opercule prédécoupé, avantageusement de forme ovale.

Les lignes de pliage 28, 29 ont, chacune, une longueur inférieure à la longueur totale des cotés 34, respectivement 35 qui sont parallèles entre eux et perpendiculaires aux côtés libres 25, 26 du panneau 27. Les lignes de pliage 28, 29 sont situées sensiblement en position médiane des côtés 34, 35. Des encoches 36 à 39, globalement configurées en V, sont ménagées sur les côtés 34, 35. Elles sont situées au niveau des coins du panneau 27, c'est-à-dire au niveau des zones de jonction entre les côtés 34, 35 et 25, 26. En d'autres termes, les lignes de pliage 28, 29 sont ménagées dans la partie pleine des côtés 34, 35. Les extrémités de ces derniers sont formées par les encoches 36, 37 respectivement 38, 39.

A la figure 1, le panneau latéral 12 est équipé de deux opercules prédécoupés 40, 41. Ces opercules, de forme carrée dans l'exemple, permettent le passage de gaines G et de conduits, étant entendu que le passage peut s'effectuer à partir ou en direction du volume intérieur de la boîte B. Avantageusement ces opercules sont de forme similaire à l'orifice 33, donc ovales. Dans d'autres modes de réalisation non illustrés, d'autres opercules sont ménagés sur d'autres panneaux, par exemple sur les panneaux 11 et 30. En variante non représentée, aucun opercule est prévu sur les panneaux constitutifs 2, 4, 11, 12, 30 de la boîte B.

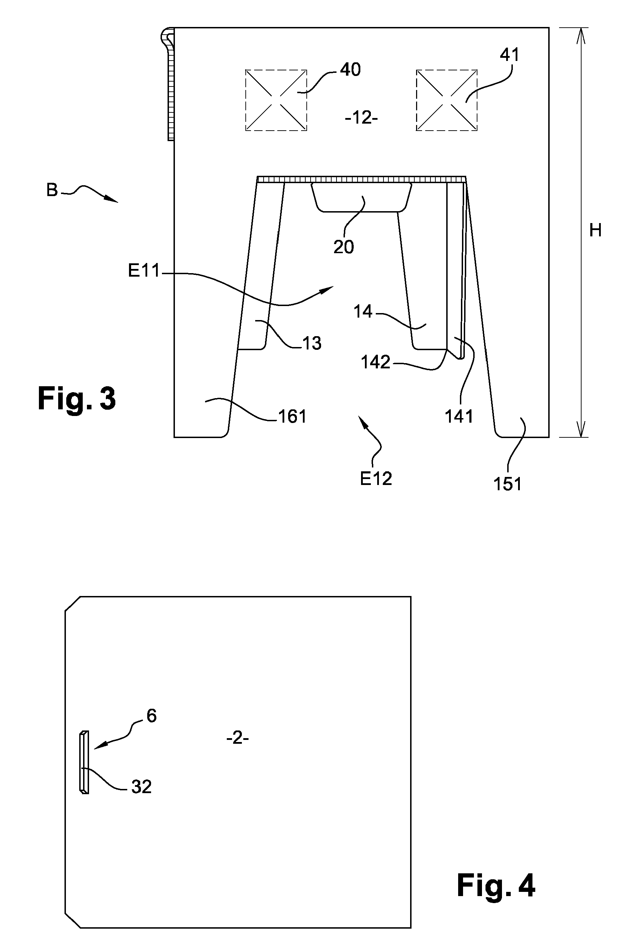

Le pliage de la plaque 1 en vue de la réalisation de la boîte B est maintenant décrit en référence aux figures 1 à 4.

Dans une première étape, on replie les parties 130, 140 en direction respectivement des parties centrales des panneaux latéraux 11 et 12, selon les lignes de pliage 132, 142. Le panneau 4 est, avantageusement de façon simultanée, rabattu selon la ligne de pliage 3 en direction du panneau 2. Lors de ce mouvement, les parties 140, 150 se positionnent contre le panneau 4, de sorte à se trouver dans le volume intérieur de la boîte B une fois celle-ci réalisée. La forme globalement trapézoïdale des parties 140, 150 permet l'insertion, lors du pliage du panneau 27 en direction du panneau 4 selon la ligne de pliage 28, des zones angulaires 143, 153 formées par la jonction entre les parties 140, 141 et 150, 151, dans les encoches 36, 37. De façon plus précise, les parties repliées 144, 154 des pattes 14, 15, selon les lignes de pliage 142, 152, sont insérées, par leurs extrémités situées au voisinage des zones 143, 153, dans les encoches 36, 37.

En poursuivant le pliage de la plaque 1, on rabat également les parties 130, 160 selon les lignes de pliage 132, 162, en direction du panneau 4 replié. Lors de ce mouvement on amène les parties 130, 160 en appui sur le panneau 2. A l'issue de ce pliage, les panneaux 11 et 12 sont en configuration finale, à savoir qu'ils définissent deux parois latérales de la boîte B.

L'étape suivante consiste à rabattre le panneau 27 par pliage selon la ligne de pliage 28, de sorte à le positionner au-dessus du panneau 2. A l'issue de ce mouvement, les parties 133, 163 repliées selon les lignes 132, 162 des pattes 13, 16 sont insérées dans les encoches 38, 39, cela de manière similaire à l'insertion des parties 134, 154 dans les encoches 36, 37. Lors de ce mouvement, on introduit également les organes de solidarisation en forme de pattes 19, 20 dans les fentes 21, 22. Les dimensions respectives des pattes 19, 20 et des fentes 21, 22 assurent un blocage en position, par coincement, des pattes 19, 20. Ainsi on assure le maintien en configuration pliée du fond 27, des panneaux latéraux 11, 12 et du couvercle 2. Par pliage, selon la ligne 29, du panneau 30 et insertion de la patte 32 dans l'orifice 6, on termine le montage, de manière réversible, de la boîte de réservation B, le volume intérieur de cette dernière étant alors défini par les panneaux 2, 4, 11, 12, 27 et 30.

Lorsque la boîte B est montée, c'est-à-dire une fois la plaque pliée, comme cela apparait à la figure 2, les parties 130, 131, 140, 141, 150, 151, 160, 161 repliées à angle droit selon respectivement les lignes de pliage 132, 142, 152, 162, forment des pieds en L. Ces pieds 42 à 45 s'étendent vers l'extérieur de la boîte B à partir des coins 46 à 49 du fond 27. Les coins 46 à 49 sont définis par les encoches 36 à 39 et par les extrémités des côtes 25 et 26. Ces pieds étant en un matériau alvéolaire à base de polymère, ils sont facilement sécables à la longueur voulue, ceci afin d'adapter la hauteur totale H de la boîte B à l'épaisseur E de béton 50 d'une dalle 51. Dans un mode de réalisation préféré non illustré, un marquage visuel ou des prédécoupes sont réalisés sur les pieds 42 à 45, ce qui permet de repérer différentes longueurs des pieds et, de facto, facilite la coupe des pieds à la longueur voulue.

Comme cela apparait à la figure 5, le couvercle 2 d'une telle boîte B est coplanaire avec la face supérieure 52 de la dalle 51, lorsque la boîte B est en place dans une dalle, la longueur des pieds 42 à 45 ayant été réglée. Une gaine G est représentée en place sur un treillis T.

Dans la mesure où un conduit inséré dans la gaine G se comporte sensiblement comme cette dernière, il sera fait uniquement référence à la gaine G par la suite, étant entendu que l'on désigne par ce terme aussi bien un ensemble formé par un conduit inséré dans une gaine G qu'une gaine G seule.

La gaine G passe entre les pieds 13, 14, 15, 16 de la boîte B et pénètre dans cette dernière par l'orifice 33. Comme illustré, la forme ovale et la position de l'orifice 33 évitent à la gaine G, et donc au conduit logé dans celle-ci, de former un coude avec un angle voisin de 90°. La gaine G peut aisément êtrereprise, en étant coudée au minimum, pour être amenée au voisinage d'une cloison C. En d'autres termes, avec une telle boîte B et un tel orifice 33, on limite les pertes de charges dans les conduits logés dans les gaines G et qui sont dues aux courbures à angle droit.

Une telle configuration, associée au fait que le couvercle 2 est plein et dépourvu d'ouvertures, dans le mode de réalisation préféré représenté, permet d'optimiser la sécurité. En effet, l'absence de dénivelé entre la dalle 51 et le couvercle 2 évite à un utilisateur de trébucher. De plus, la configuration du couvercle 2 permet de résister au poids d'un utilisateur qui marcherait sur le couvercle 2.

Comme cela ressort de ce qui précède, les espaces E11 et E12 permettent le passage de la gaine G entre les pattes 13, 14 et 15, 16 qu'ils séparent respectivement. A l'état monté de la boîte, tel qu'illustré en figures 2, 3 et 5, ces espaces E11 et E12 séparent les pattes sur toute la hauteur de celles-ci et s'étendent jusqu'au panneau de fond 27.

L'accès au volume intérieur se fait, avantageusement, par découpage du couvercle, aux dimensions voulues par l'utilisateur. Celui-ci peut aisément reprendre les gaines G, et donc les conduits, dont une portion s'étend dans le volume intérieur de la boîte B, comme illustré à la figure 5. Si besoin, une sortie ou une entrée pour d'autres gaines G peut être effectuée à partir des opercules prédécoupés 40, 41.

La figure 6 illustre un autre mode de réalisation de l'invention. Une boîte de réservation est obtenue par pliage d'une plaque 60 en un matériau alvéolaire, similaire à celui constitutif de la plaque 1. Trois lignes de pliage 61, 62, 63 réalisées selon la largeur d'une partie rectangulaire de la plaque 60 définissent, avec une ligne de pliage 64 orientée selon la longueur de la partie rectangulaire, les panneaux 65 à 68 constitutifs de la boîte de réservation. En l'espèce, le panneau 65 est constitutif du fond de la boîte de réservation. Il est libre par trois côtés et rattaché, par la ligne de pliage 61, au panneau 66. Ce panneau 66 est un panneau latéral de la boîte et il est également relié, par la ligne de pliage 62, au panneau 67 formant le couvercle de la boîte. Le panneau 67 est également relié par la ligne de pliage 63 au panneau 68 définissant un second panneau latéral de la boîte. Les autres côtés des panneaux 66 et 68 sont libres, étant entendu que ces panneaux sont rectangulaires. Les panneaux 65 et 67 sont carrés. En variante non illustrée, la forme des panneaux est différente.

Le panneau 65 est pourvu d'un orifice 69, similaire quant à sa forme et sa position, à l'orifice 33. Deux fentes 70, 71 sont disposées parallèlement aux côtés 72, respectivement 73, du panneau 65. Ces côtés 72, 73 sont perpendiculaires à la ligne de pliage 61. Le côté 74 du panneau 65, parallèle à la ligne de pliage 61, est équipé d'un organe de solidarisation en forme de patte centrale 75.

Le panneau 66 est équipé, au voisinage de la ligne de pliage 62, d'une fente 76 parallèle à la ligne de pliage 62. Les côtés 77, 78 définissent la largeur du panneau 66. Le côté 77 est libre, le côté 78 étant délimité par une partie de la ligne de pliage 64.

Le panneau 67, donc le couvercle de la boîte, est pourvu d'une fente 79 parallèle et située en position centrale sur un côté 80 du panneau 67, parallèlement à la ligne de pliage 64. Une patte 81 est fixée sur toute la longueur du côté 80.

Le panneau 68 est pourvu de deux fentes parallèles 82, 83. La fente 82 est située au voisinage de la ligne de pliage 63, la fente 83 étant à proximité du côté libre 84 du panneau 68. Un côté 85 définissant la largeur du panneau 68 comprend une zone concave 86. La zone 86 est située à la jonction entre les côtés 84 et 85. En d'autres termes, le coin 86 est échancré.

La ligne de pliage 64 assure la liaison entre le panneau 67 et deux pattes 87, 88. Ces pattes 87, 88 sont elles-mêmes reliées par une partie centrale 89, constitutive en configuration montée de la boite d'un côté ou panneau latéral de la boite, conférant à l'ensemble 87 à 89, une forme en U. Le fond du U est pourvu d'un organe de solidarisation en forme de patte pliable 90. La patte 87 est reliée par un côté défini par une ligne de pliage 91 à une patte 92. Cette dernière est solidaire, par une partie centrale 93, d'une patte 94, située en regard de la patte 92. La partie 93 est également constitutive en configuration montée de la boite d'un côté ou panneau latéral de la boite. En d'autres termes, l'ensemble 92 à 94 est également configuré en U. Le bord libre 95 de la patte 94 est équipée d'un organe de solidarisation en forme de patte 96 pourvue d'une fente 97.

De façon similaire, la patte 88 est reliée par un côté défini par une ligne de pliage 98 à une patte 99 qui, avec une partie centrale 100 et une patte 101 forme également un ensemble configuré en U. Un côté, formé par une ligne de pliage 102, de la patte 101 est relié à une patte 103 formant, avec une partie centrale 104 et une patte 105, un autre ensemble configuré en U. La partie centrale 104 est pourvue d'un organe de solidarisation en forme de patte pliable 106. La patte 105 est pourvue d'une ligne de pliage 107. Une découpe 108, ménagée dans la ligne de pliage 107 est équipée d'une patte pliable 109 formant également un organe de solidarisation. Cette dernière est fixée par un seul côté à un bord de la découpe 108. Ainsi, la patte 109 est pliable, à partir de la découpe 108, indépendamment de cette dernière. La partie 104 est également pourvue d'une patte 111, formant un organe de solidarisation et située en regard de la patte 106.

De façon similaire aux parties 89, 83 les parties centrales 100, 104 sont constitutives des panneaux latéraux de la boite. Deux pattes adjacentes sont séparées par des espaces intercalaires, dont la structure et la fonction sont analogues à celles des espaces E11 et E12 du premier mode de réalisation. On retrouve ainsi, dans ce second mode de réalisation, quatre espaces intercalaires notés E89, E93, E100 et E104.

Le pliage de la plaque 60 est maintenant décrit, pour réaliser une boîte de réservation conforme à l'invention.

Dans une première étape, on rabat le panneau 65 en direction du panneau 67, en insérant la patte 75 dans la fente 83. Il est à noter que la fente 76, en créant une zone de faiblesse à proximité de la ligne de pliage 62, facilite le pliage. En variante non illustrée, le panneau 66 est dépourvu de fente 76. Cette première étape permet la mise en forme du corps de la boîte de réservation en rabattant les uns vers les autres les panneaux 65 à 68. On amène ensuite la partie 89 en direction du panneau 65, en insérant la patte 90 dans la fente 70. On replie ensuite la partie 93 contre la face externe du panneau 68. Le maintien en place est assuré par insertion d'une patte 110 dans la fente 82. Le mouvement est facilité par la présence de la zone échancrée 86.

On rabat alors la partie centrale 100 contre la face externe du panneau 66, puis on plie la partie 104 selon la ligne de pliage 102, afin que la partie 104 vienne fermée le côté ouvert de la boîte. Le maintien en place de la partie 104 est obtenu par insertion de la patte 106 dans la fente 71 et de la patte 111, dans la fente 79. La patte 81 repliée vers l'intérieur de la boîte participe au maintien en forme de la boîte, en évitant que la partie 104 empiète dans le volume intérieur de la boîte.

Dans une dernière étape, on rabat les pattes 94 et 105 en direction l'une de l'autre. Lors de cette manoeuvre, on insère la patte 96 sous la partie pliée, selon la ligne de pliage 107, de la patte 105 et on introduit la patte 109 dans la fente 97. En d'autres termes, dans ce mode de réalisation, on rabat d'abord les uns vers les autres deux panneaux latéraux, le fond et le couvercle puis les autres panneaux, dont les deux autres panneaux latéraux 89, 104, en mettant en forme, par pliage des pattes, les pieds et de sorte que ces panneaux entourent les premiers panneaux pliés.

Dans le mode de réalisation de l'invention illustré à la figure 6, le corps principal de la boîte est ainsi formé en premier, les pieds étant ensuite mis en forme par pliage de pattes 87, 88, 92, 94, 99, 101, 103, 105 reliées entre elles.

Dans ce mode de réalisation aussi, les pieds sont avantageusement pourvus d'un marquage visuel ou de prédécoupes facilitant la coupe des pieds à la longueur voulue. Le marquage visuel ou la présence de prédécoupes permet, dans les différents modes de réalisation, que le couvercle 2 ; 67 de la boite soit coplanaire à la face 52 de la dalle 51, ce qui améliore la sécurité en évitant à un utilisateur de trébucher dans un trou ou contre un obstacle.

De plus, la présence d'espaces intercalaires E11, E12 ; E89, E93, E100, E104 permet le passage du béton lors du coulage de la dalle. Une telle configuration permet d'optimiser l'emploi de béton.

## Revendications

1. Boîte de réservation (B) comprenant des panneaux latéraux, un panneau de fond et un couvercle, cette boîte délimitant un espace de passage d'au moins une gaine et/ou conduit technique dans une dalle (51) en béton (50), la boîte étant formée par pliage d'une plaque (1 ; 60) en matériau alvéolaire comportant des lignes de pliage (3, 9, 10, 28, 29, 132, 142, 152, 162; 61, 62, 63, 91, 98, 102, 107) délimitant les panneaux latéraux (4, 11, 12, 30 ; 66, 68), de fond (27 ; 65) et le couvercle (2 ; 67) de la boîte (B), le panneau de fond (27 ; 65) étant pourvu d'au moins un orifice (33 ; 69) d'entrée d'au moins une gaine (G) et/ou conduit technique dans la boîte (B), **caractérisée en ce qu'**au moins un panneau latéral (11, 12 ; 89, 93, 100, 104) est pourvu d'au moins deux pattes (13, 14, 15, 16 ; 87, 88, 92, 94, 99, 101, 103, 105) formant, après pliage de la plaque (1 ; 60), des pieds à la boîte de réservation (B).

2. Boîte de réservation selon la revendication 1, **caractérisée en ce que**, pour au moins un panneau latéral, les deux pattes (13, 14, 15, 16 ; 87, 88, 92, 94, 99, 101, 103, 105) de ce panneau sont séparées par un espace intercalaire (E11, E12 ; E89, E93, E100, E104) permettant, à l'état monté de la boîte, le passage d'au moins une gaine (G) et/ou conduit technique.

3. Boîte de réservation selon la revendication 2, **caractérisée en ce que**, à l'état monté de la boîte, l'espace intercalaire s'étend sur toute la hauteur des pattes jusqu'au panneau de fond (27 ; 65).

4. Boîte de réservation selon l'une des revendications précédentes, **caractérisée en ce que** l'orifice (33 ; 69) est ovale.

5. Boîte de réservation selon l'une des revendications précédentes, **caractérisée en ce que** l'orifice (33 ; 69) est en position excentrée sur le panneau de fond (27 ; 65).

6. Boîte de réservation selon l'une des revendications précédentes, **caractérisée en ce que** l'orifice (33 ; 69) est pourvu d'un opercule prédécoupé.

7. Boîte de réservation selon l'une des revendications précédentes, **caractérisée en ce que** les pattes (13, 14 et 15, 16) sont configurées en L et définissent deux extrémités des panneaux latéraux (11, 12).

8. Boîte de réservation selon l'une des revendications précédentes, **caractérisée en ce qu'**n marquage visuel ou des prédécoupes sont réalisés sur les pattes (13, 14, 15, 16 ; 87, 88, 92, 94, 99, 101, 103, 105), ce qui permet de repérer différentes longueurs des pieds.

9. Boîte de réservation selon l'une des revendications précédentes, **caractérisée en ce que** les panneaux (2, 4, 11, 12, 37, 30 ; 65 à 68, 89, 93, 100, 104) sont maintenus en configuration pliée par des organes de solidarisation (19, 20, 32 ; 75, 90, 96, 106, 109), en forme de pattes, insérés dans des orifices ou fentes (6, 21, 22 ; 70, 71, 79, 83, 97) de forme complémentaire.

10. Boîte selon la revendication 9, **caractérisée en ce que** les panneaux (2, 4, 11, 12, 30, 37 ; 65 à 68, 89, 93, 100, 104) sont maintenus en configuration pliée de manière réversible.

11. Procédé de montage d'une boîte de réservation selon un premier mode de réalisation conforme à l'une des revendications précédentes, **caractérisé en ce qu'**il comprend au moins les étapes suivantes :
- on plie les pattes (13 à 16) définissant des extrémités de panneaux latéraux (11, 12) en les rabattant en direction du couvercle (2), afin de former les coins de la boîte,
- on insère une partie (140, 150) des pattes (14, 15) pliées dans des encoches (36, 37) ménagées entre un panneau latéral (4) et le panneau de fond (27),
- on rabat le panneau de fond (27), de sorte qu'il soit parallèle au couvercle (2), en insérant des parties (130, 160) des pattes (13, 16) pliées dans des encoches ménagées entre le panneau de fond (27) et un panneau latéral (30) et
- on insère les organes de solidarisation (19, 20, 32) dans les orifices correspondants (21, 22, 6).

12. Procédé de montage d'une boîte de réservation selon un second mode de réalisation conforme à l'une des revendications 1 à 6, **caractérisé en ce qu'**il comprend au moins les étapes suivantes :
- on rabat les uns vers les autres les panneaux (65 à 68) constitutifs du fond (65), du couvercle (67) et de deux côtés (66, 67) de la boîte pour définir le volume intérieur de la boîte,
- on rabat les panneaux (89, 93, 100, 104) constitutifs des panneaux latéraux pourvus des pattes (87, 88, 92, 94, 99, 101, 103, 105, 107) en recouvrant les panneaux (66, 67) formant déjà deux côtés de la boîte, pour fermer tous les côtés de la boîte et pour réaliser par pliage des pattes (87, 88, 92, 94, 99, 101, 103, 105, 107) les pieds de cette dernière et
- on insère les organes de solidarisation (75, 90, 96, 106, 109) dans les orifices (70, 71, 79, 83, 97) correspondants.

## Patentansprüche

1. Verteilerkasten (B), der Seitenwände, eine Bodenwand und einen Deckel enthält, wobei dieser Kasten einen Durchgangsraum für mindestens einen Installationsschacht und/oder Installationskanal in einer Platte (51) aus Beton (50) begrenzt, wobei der Kasten durch Falten einer Platte (1; 60) aus Schaummaterial geformt wird, die Faltlinien (3, 9, 10, 28, 29, 132, 142, 152, 162; 61, 62, 63, 91, 98, 102, 107) aufweist, welche die Seitenwände (4, 11, 12, 30; 66, 68), die Bodenwand (27; 65) und den Deckel (2; 67) des Kastens (B) begrenzen, wobei die Bodenwand (27; 65) mit mindestens einer Eingangsöffnung (33; 69) für mindestens einen Installationsschacht (G) und/oder Installationskanal in den Kasten (B) ausgestattet ist, **dadurch gekennzeichnet, dass** mindestens eine Seitenwand (11, 12; 89, 93, 100, 104) mit mindestens zwei Laschen (13, 14, 15, 16; 87, 88, 92, 94, 99, 101, 103, 105) versehen ist, die nach dem Falten der Platte (1; 60) Füße für den Verteilerkasten (B) bilden.

2. Verteilerkasten nach Anspruch 1, **dadurch gekennzeichnet, dass** für mindestens eine Seitenwand die zwei Laschen (13, 14, 15, 16; 87, 88, 92, 94, 99, 101, 103, 105) dieser Wand durch einen Zwischenraum (E11, E12; E89, E93, E100, E104) getrennt sind, der im montierten Zustand des Kastens den Durchgang mindestens eines Installationsschachts (G) und/oder Installationskanals erlaubt.

3. Verteilerkasten nach Anspruch 2, **dadurch gekennzeichnet, dass** der Zwischenraum sich über die ganze Höhe der Laschen bis zur Bodenwand (27; 65) erstreckt.

4. Verteilerkasten nach einem der vorhergehenden Ansprüche, **dadurch gekennzeichnet, dass** die Öffnung (33; 69) oval ist.

5. Verteilerkasten nach einem der vorhergehenden Ansprüche, **dadurch gekennzeichnet, dass** die Öffnung (33; 69) sich in außermittiger Stellung auf der Bodenwand (27; 65) befindet.

6. Verteilerkasten nach einem der vorhergehenden Ansprüche, **dadurch gekennzeichnet, dass** die Öffnung (33; 69) mit einem zugeschnittenen Verschlussorgan versehen ist.

7. Verteilerkasten nach einem der vorhergehenden Ansprüche, **dadurch gekennzeichnet, dass** die Laschen (13, 14 und 15, 16) L-förmig konfiguriert sind und zwei Enden der Seitenwände (11, 12) definieren.

8. Verteilerkasten nach einem der vorhergehenden Ansprüche, **dadurch gekennzeichnet, dass** eine visuelle Markierung oder Vorausschnitte auf den Laschen (13, 14, 15, 16; 87, 88, 92, 94, 99, 101, 103, 105) ausgeführt sind, was es ermöglicht, verschiedene Längen der Füße zu kennzeichnen.

9. Verteilerkasten nach einem der vorhergehenden Ansprüche, **dadurch gekennzeichnet, dass** die Wände (2, 4, 11, 12, 37, 30; 65 bis 68, 89, 93, 100, 104) durch Organe zur festen Verbindung (19, 20, 32; 75, 90, 96, 106, 109) in Form von Laschen in gefalteter Konfiguration gehalten werden, die in Öffnungen oder Schlitze (6, 21, 22; 70, 71, 79, 83, 97) komplementärer Form eingeführt werden.

10. Kasten nach Anspruch 9, **dadurch gekennzeichnet, dass** die Wände (2, 4, 11, 12, 30, 37; 65 bis 68, 89, 93, 100, 104) umkehrbar in gefalteter Konfiguration gehalten werden.

11. Verfahren zur Montage eines Verteilerkastens gemäß einer ersten Ausführungsform entsprechend einem der vorhergehenden Ansprüche, **dadurch gekennzeichnet, dass** es mindestens die folgenden Schritte enthält:
- die die Enden von Seitenwände (11, 12) definierenden Laschen (13 bis 16) werden gefaltet, indem sie in Richtung des Deckels (2) umgeschlagen werden, um die Ecken des Kastens zu formen,
- ein Teil (140, 150) der gefalteten Laschen (14, 15) wird in Einschnitte (36, 37) eingeführt, die zwischen einer Seitenwand (4) und der Bodenwand (27) vorgesehen sind,
- die Bodenwand (27) wird so umgeschlagen, dass sie zum Deckel (2) parallel ist, indem Teile (130, 160) der gefalteten Laschen (13, 16) in Einschnitte eingeführt werden, die zwischen der Bodenwand (27) und einer Seitenwand (30) vorgesehen sind, und
- die Organe zur festen Verbindung (19, 20, 32) werden in die entsprechenden Öffnungen (21, 22, 6) eingeführt.

12. Verfahren zur Montage eines Verteilerkastens gemäß einer zweiten Ausführungsform entsprechend einem der Ansprüche 1 bis 6, **dadurch gekennzeichnet, dass** es mindestens die folgenden Schritte enthält:
- die den Boden (65), den Deckel (67) und zwei Seiten (66, 67) des Kastens bildenden Wände (65 bis 68) werden zueinander umgeschlagen, um das Innenvolumen des Kastens zu definieren,
- die die mit den Laschen (87, 88, 92, 94, 99, 101, 103, 105, 107) versehenen Seitenwände bildenden Wände (89, 93, 100, 104) werden umgeschlagen, indem die bereits zwei Seiten des Kastens formenden Wände (66, 67) überdeckt werden, um alle Seiten des Kastens zu schließen und um durch Falten der Laschen (87, 88, 92, 94, 99, 101, 103, 105, 107) die Füße dieses letzteren herzustellen, und
- die Organe zur festen Verbindung (75, 90, 96, 106, 109) werden in die entsprechenden Öffnungen (70, 71, 79, 83, 97) eingeführt.

## Claims

1. Reservation box (B) comprising side panels, a bottom panel and a lid, this box delimiting a space for the passage of at least one sleeve and/or technical conduit in a slab (51) of concrete (50), the box being formed by folding one sheet (1; 60) of cellular material comprising folding lines (3, 9, 10, 28, 29, 132, 142, 152, 162; 61, 62, 63, 91, 98, 102, 107) delimiting the side panels (4, 11, 12, 30; 66, 68), bottom panels (27; 65) and the lid (2; 67) of the box (B), the bottom panel (27; 65) being provided with at least one inlet opening (33; 69) for at least one sleeve (G) and/or technical conduit into the box (B), **characterized in that** at least one side panel (11, 12; 89, 93, 100, 104) is provided with at least two tabs (13, 14, 15, 16; 87, 88, 92, 94, 99, 101, 103, 105) forming, after folding of the sheet (1; 60), feet for the pocket box (B).

2. Reservation box according to Claim 1, **characterized in that**, for at least one side panel, the two tabs (13, 14, 15, 16; 87, 88, 92, 94, 99, 101, 103, 105) of this panel are separated by an interspace (E11, E12; E89, E93, E100, E104) allowing, in the assembled state of the box, the passage of at least one sleeve (G) and/or technical conduit.

3. Reservation box according to Claim 2, **characterized in that**, in the assembled state of the box, the interspace extends over the entire height of the tabs as far as the bottom panel (27; 65).

4. Reservation box according to one of the preceding claims, **characterized in that** the opening (33; 69) is oval.

5. Reservation box according to one of the preceding claims, **characterized in that** the opening (33; 69) is in an off-centre position on the bottom panel (27; 65).

6. Reservation box according to one of the preceding claims, **characterized in that** the opening (33; 69) is provided with a pre-cut cover.

7. Reservation box according to one of the preceding claims, **characterized in that** the tabs (13, 14 and 15, 16) are L-shaped and define two ends of the side panels (11, 12).

8. Reservation box according to one of the preceding claims, **characterized in that** visual marking or cutouts are created on the tabs (13, 14, 15, 16; 87, 88, 92, 94, 99, 101, 103, 105), which makes it possible to identify different lengths of the feet.

9. Reservation box according to one of the preceding claims, **characterized in that** the panels (2, 4, 11, 12, 37, 30; 65 to 68, 89, 93, 100, 104) are held in the folded configuration by securing members (19, 20, 32; 75, 90, 96, 106, 109) in the form of tabs, which are inserted in a complementary manner into openings or slots (6, 21, 22; 70, 71, 79, 83, 97).

10. Box according to Claim 9, **characterized in that** the panels (2, 4, 11, 12, 30, 37; 65 to 68, 89, 93, 100, 104) are reversibly held in the folded configuration.

11. Method for assembling a reservation box according to a first embodiment according to one of the preceding claims, **characterized in that** it comprises at least the following steps:
- folding the tabs (13 to 16) defining ends of side panels (11, 12) by folding them down in the direction of the lid (2) so as to form the corners of the box,
- inserting a portion (140, 150) of the folded tabs (14, 15) into notches (36, 37) created between a side panel (4) and the bottom panel (27),
- folding down the bottom panel (27) such that it is parallel to the lid (2), inserting portions (130, 160) of the folded tabs (13, 16) into notches created between the bottom panel (27) and a side panel (30) and
- inserting the securing members (19, 20, 32) into the corresponding openings (21, 22, 6).

12. Method for assembling a reservation box according to a second embodiment according to one of Claims 1 to 6, **characterized in that** it comprises at least the following steps:
- folding down, towards one another, the panels (65 to 68) that form the bottom (65), the lid (67) and two sides (66, 67) of the box so as to define the internal volume of the box,
- folding down the panels (89, 93, 100, 104) that form the side panels provided with the tabs (87, 88, 92, 94, 99, 101, 103, 105, 107), covering the panels (66, 67) already forming two sides of the box, so as to close all the sides of the box and create, by folding the tabs (87, 88, 92, 94, 99, 101, 103, 105, 107), the feet of the latter and
- inserting the securing members (75, 90, 96, 106, 109) into the corresponding openings (70, 71, 79, 83, 97).
